(19) Europäisches Patentamt / European Patent Office / Office européen des brevets

(11) **EP 2 669 730 A2**

(12) **EUROPEAN PATENT APPLICATION**
published in accordance with Art. 153(4) EPC

(43) Date of publication:
**04.12.2013 Bulletin 2013/49**

(51) Int Cl.:
**G02B 27/26** (2006.01)     **H04N 13/04** (2006.01)

(21) Application number: **12739523.4**

(22) Date of filing: **25.01.2012**

(86) International application number:
**PCT/KR2012/000605**

(87) International publication number:
**WO 2012/102550 (02.08.2012 Gazette 2012/31)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **25.01.2011 KR 20110007440**
**25.01.2012 KR 20120007310**

(71) Applicant: **LG Chem, Ltd.**
**Youngdungpo-gu**
**Seoul 150-721 (KR)**

(72) Inventors:
• **JEON, Byoung Kun**
**Daejeon 305-340 (KR)**
• **PARK, Moon Soo**
**Daejeon 302-777 (KR)**
• **KIM, Sin Young**
**Daejeon 305-792 (KR)**

(74) Representative: **Goddar, Heinz J.**
**Boehmert & Boehmert**
**Pettenkoferstrasse 20-22**
**80336 München (DE)**

(54) **STEREOSCOPIC IMAGE DISPLAY DEVICE**

(57) The present invention relates to a stereoscopic image display device and glasses for observing a stereoscopic image. The stereoscopic image display device or glasses may be useful in minimizing the difference in optical properties between the R signal and the L signal and observing a high-quality stereoscopic image without causing adverse effects such as so-called crosstalk when the stereoscopic image is observed on the display device.

Fig. 9

**Description**

TECHNICAL FIELD

The present invention relates to a stereoscopic image display device and glasses for observing a stereoscopic image.

BACKGROUND

A stereoscopic image display device is a display device that can deliver three-dimensional (3D) information to an observer.

Methods of displaying a stereoscopic image may be largely classified into a method using glasses and a method that doesn't use glasses. Also, the method using glasses may be classified again into a method using polarizing glasses and a method using LC shutter glasses, and the method that doesn't use glasses may be classified again into binocular disparity/multi-view autostereoscopic display methods, volumetric display methods and holographic display methods.

DETAILED DESCRIPTION

TECHNICAL OBJECT

The present invention provides a stereoscopic image display device and glasses for observing a stereoscopic image.

TECHNICAL SOLUTION

One illustrative stereoscopic image display device may be a device, a stereoscopic image emitted from which may be observed after wearing glasses for observing the stereoscopic image. The stereoscopic image display device may include a display element, a first polarizing plate and a filter. The display element, the first polarizing plate and the filter may be sequentially arranged so that a signal generated at the display element may be incident on the filter after passing through the first polarizing plate and then be transmitted through the filter to an observer wearing the glasses.

In this specification, terms such as "vertical," "horizontal," "perpendicular" or "parallel," or numerical values used for defining angles may refer to substantial numerical values or mean substantially vertical, horizontal, perpendicular or parallel without causing damage to desired effects. For example, each of the terms is used in consideration of manufacturing errors or variations. Therefore, each of the terms may, for example, include an error of not more than approximately ±15 degrees, an error of not more than approximately ±10 degrees, or an error of not more than approximately ±5 degrees.

In this specification, the term "same" used for defining length, width, thickness and pitch or description of the relationships of the length, the width, the thickness or the pitch may also mean substantially the same without causing damage to desired effects. For example, the term is used in consideration of manufacturing errors or variations. Therefore, the term "same" may, for example, include an error of not more than approximately ±60 $\mu$m, an error of not more than approximately ±40 $\mu$m, or an error of not more than approximately ±20 $\mu$m.

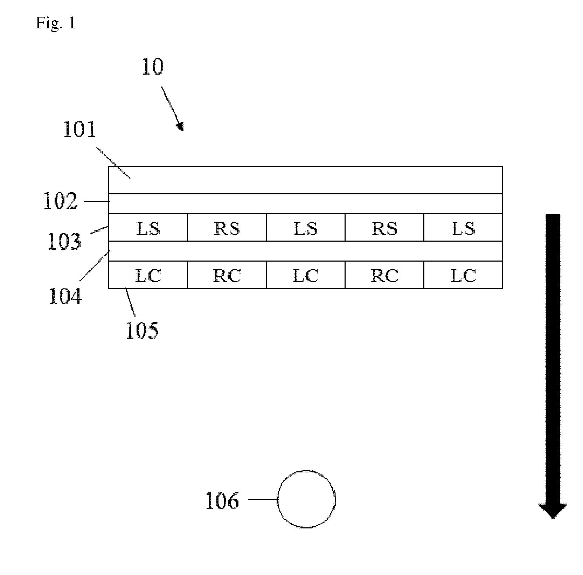

Also, the term "observer's direction" or "direction along which a signal is transmitted" as used herein may refer to a direction along which a signal generated at the display element travels to the observer in a driving state. For example, the direction may refer to a direction indicated by the arrow in Fig. 1.

Also, the term "driving state" or "displaying state of the stereoscopic image" as used herein may refer to a state in which the stereoscopic image display device is in a driving state, i.e., the stereoscopic image is displayed to the observer.

Fig. 1 shows a schematic of one illustrative embodiment of the display device. The arrow in Fig. 1 represents a direction along which a signal is transmitted from the display device, and the observer 106 may wear the glasses and observe the stereoscopic image.

The display device 10 of Fig. 1 includes a display element 103 and a first polarizing plate 104. Also, the display device 10 includes a filter 105 on which a signal transmitted from the display element 103 and passing through the first polarizing plate 104 is incident.

As shown in Fig. 1, the display device 10 may further include a second polarizing plate 102 and a light source 101, which are sequentially arranged on the display element 103 and disposed on the opposite side of the first polarizing plate 104.

The first and second polarizing plates 102 and 104 in the display device 10 may be optical devices in which a transmission axis and an absorption axis perpendicular to the transmission axis are formed. Thus, if light is incident on the first and second polarizing plates 102 and 104, only a signal having a polarization axis parallel to the transmission axis may be transmitted through the first and second polarizing plates 102 and 104.

In one embodiment, the first and second polarizing plates 102 and 104 included in the display device 10 may be optical devices, each of which includes an absorption axis and a transmission axis. The first polarizing plate 104 and the second polarizing plate 102 in the display device may be arranged so that the absorption axis of the first polarizing plate 104 may be positioned to be perpendicular to the absorption axis of the second polarizing plate 102. In this case, the transmission axes of the first and second polarizing plates 102 and 104 may also be perpendicular to each other.

A direct-type or edge-type backlight unit (BLU) generally used in liquid crystal displays (LCDs) may be, for example, used as the light source 101. Other various kinds of light sources may also be used as the light source 101 without limitation.

The display element (for example, reference numeral 103 in Fig. 1) may include a region (hereinafter, referred to as "LS region") configured to generate a signal (hereinafter, referred to as "L signal") for a left eye in the driving state, and a region (hereinafter, referred to as "RS region") configured to generate a signal (hereinafter, referred to as "R signal") in the driving state.

For example, a transmissive liquid crystal display panel having a liquid crystal layer formed between two substrates may be used as such a display element. This type of the display panel may, for example, include a first substrate, a pixel electrode, a first alignment film, a liquid crystal layer, a second alignment film, a common electrode and a second substrate, which are sequentially arranged from one side of the light source 101. For example, as a drive element electrically connected to a transparent pixel electrode, an active-type drive circuit including a thin film transistor (TFT) and wires may be formed on the substrate disposed at a side of the light source 101. For example, the pixel electrode may include indium tin oxide (ITO) and function as an electrode in each pixel. Also, the first or second alignment film may include, for example, a material such as a polyimide. The liquid crystal layer may include, for example, a liquid crystal in a vertical alignment (VA), twisted nematic (TN), super-twisted nematic (STN) or in-plane switching (IPS) mode. According to a voltage applied from the drive circuit, the liquid crystal layer may transmit lights from the light source 11 through each pixel or intercept the lights by each pixel. For example, the common electrode may include ITO, and function as a common counter electrode.

In the display element 103, as regions capable of generating the L signal or the R signal in the driving state, LS and RS regions including at least one pixel may be formed. For example, one unit pixel including liquid crystals sealed between respective alignment films, or at least two unit pixels may form the LS and RS regions. The LS and RS regions may be arranged in row and/or column directions.

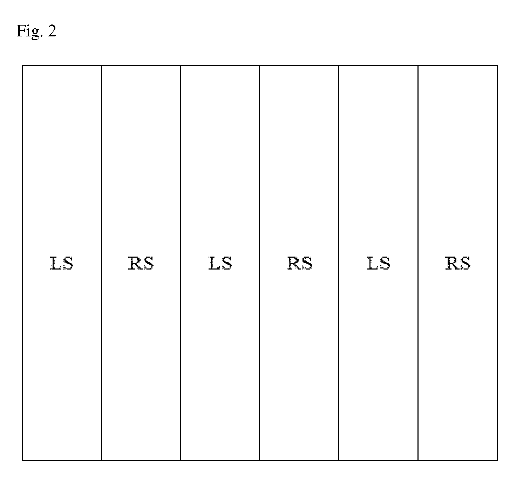

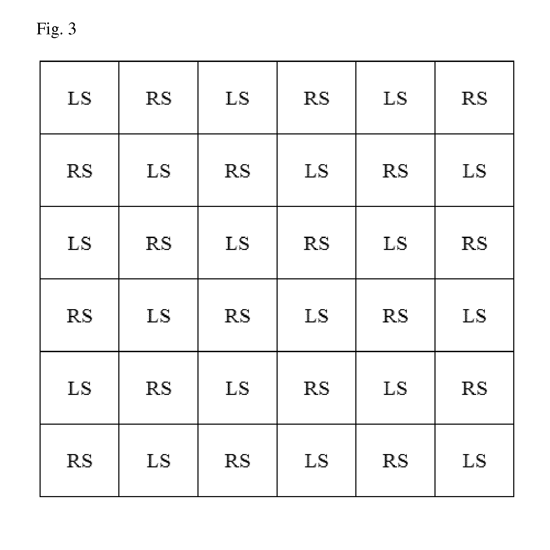

Fig. 2 shows a schematic of one illustrative embodiment of the arrangement of the RS and LS regions. As shown in Fig. 2, the RS and LS regions may have stripe shapes extending in the same direction, and may be alternately arranged adjacent to each other. Fig. 3 shows a schematic of other illustrative embodiment of the arrangement of the RS and LS regions. Here, the RS and LS regions may be alternately arranged adjacent to each other in a lattice pattern. The arrangement of RS and LS regions is not limited to the arrangements as shown in Figs. 2 and 3, and a variety of designs known in the art are applicable.

The display panel may generate signals including the R and L signal by driving the pixel in each region according to signals in the driving state and then transmit the generated signals toward the observer.

For example, referring to Fig. 1, if lights emitted from the light source 101 are incident on the second polarizing plate 102, only lights polarized parallel to the transmission axis of the polarizing plate 102 may pass through the polarizing plate 102, and then be incident on the display element 103. If the lights are incident on the display element 103, the light passing through the RS region may be converted into the R signal, and the light passing through the LS region may be converted into the L signal.

If the signals including the R and L signals are incident on the first polarizing plate 104, only the lights polarized parallel to the transmission axis of the polarizing plate 104 may be transmitted through the first polarizing plate 104.

The filter 105 may be arranged on one side of the first polarizing plate 104, opposite side to the display element 103, as shown in Fig. 1. As described above, the signal which is generated at the display element 103 may pass through the filter 105 after passing through the first polarizing plate 104 and then be transmitted to the observer 106.

In one embodiment, the filter 105 may include a polarization-state-control region (hereinafter, referred to as "RC region") for the R signal arranged so that the R signal among the signals transferred from the display element 103 can be incident on, and a polarization-state-control region (hereinafter referred to as "LC region") for the L signal arranged so that the L signal among the signals transferred from the display element 103 can be incident on.

Each of the LC and RC regions may include a retardation layer. In one embodiment, the LC region may include a retardation layer of which an optical axis is formed in a first direction, and the RC region may include a retardation layer of which an optical axis is formed in a second direction different from the first direction. The term "optical axis" as used herein may refer to a fast axis or a slow axis when lights penetrate a corresponding region. Unless particularly defined otherwise, the optical axis may refer to the slow axis.

In one embodiment, the RC region of the filter 105 may have a size corresponding to that of the RS region and be positioned in a position corresponding to that of the RS region so that the R signal generated and transmitted from the RS region in the driving state may be incident on, and the LS region may have a size corresponding to that of the LS region and be position in a position corresponding to that of the LS region so that the L signal generated and transmitted from the LS region in the driving state may be incident on.

In the above, the size or the position of the RC or LC region, corresponding to that of the RS or LS region may mean a size or a position, determined in order for the R signal generated from the RS region to be incident on the RC region and for the L signal generated from the LS region to be incident on the LC region, but doesn't mean that the size or the position of the RC or LC region should be identical to that of the RS or LS region.

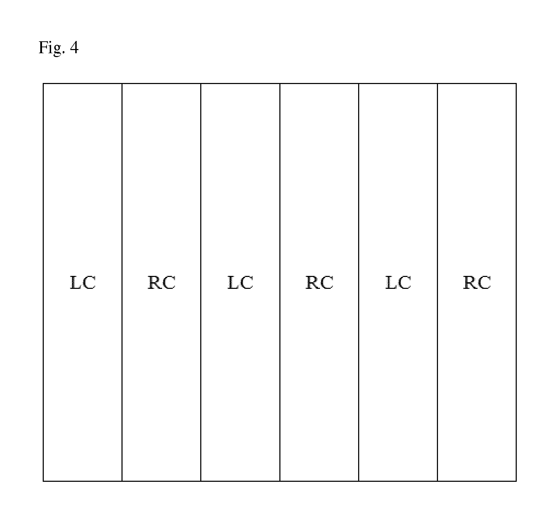

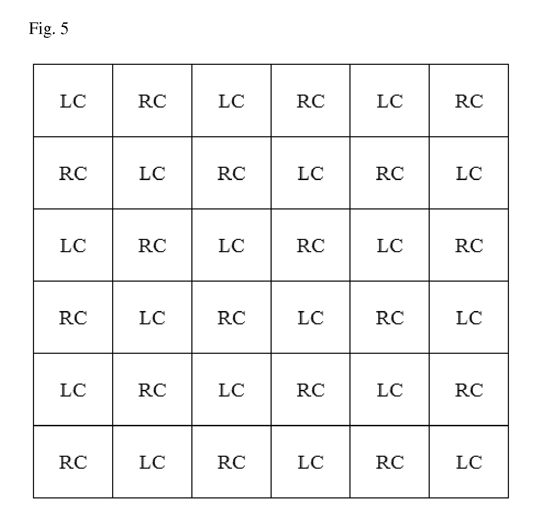

For example, the RC and LC regions may be formed in stripe shapes extending in the same direction, and be alternately arranged adjacent to each other; or may be alternately arranged adjacent to each other in a lattice pattern, according to the arrangement of RS and LS regions of the display element. For example, if the RS and LS regions are arranged as shown in Fig. 2, the RC and LC regions may be arranged in a shape as shown in Fig. 4. On the other hand, if the RS and LS region are arranged as shown in Fig. 3, the RC and LC regions may be arranged in a shape as shown in Fig. 5.

The signals after passing through the RC region and the signals after passing through the LC region in the driving state may have different polarized states from each other.

In one embodiment, one signal of the signals after passing through the RC region and after passing through the LC region may be a left-circularly polarized signal, and the other signal may be a right-circularly polarized signal. For example, the R signal generated at the display element may be incident on the RC region after passing through the first polarizing plate, and then be emitted as the left-circularly polarized light or the right-circularly polarized light. Also, the L signal may be incident on the LC region after passing through the first polarizing plate, and then be emitted as the right-circularly polarized light or the left-circularly polarized light, of which a rotating direction is opposite to that of the R signal.

A filter in which the retardation layer included in the RC and LC regions is a $\lambda/4$ wavelength layer may be used as the filter capable of outputting the left-circularly signal and the right-circularly polarized signal. In order to generate circularly polarized light rotating in reverse directions, the $\lambda/4$ wavelength layer on the RC region and the $\lambda/4$ wavelength layer on the LC region may be formed so that the optical axis of the $\lambda/4$ wavelength layer in the RC region may be different from the optical axis of the $\lambda/4$ wavelength layer in the LC region. In one embodiment, the RC region may include a $\lambda/4$ wavelength layer having the optical axis in a first direction as the retardation layer, and the LC region may include a $\lambda/4$ wavelength layer having the optical axis in a second direction different from the first direction as the retardation layer. The term "$\lambda/4$ wavelength layer" as used herein may refer to a phase retardation device configured to phase-retard incident light by 1/4 times of a wavelength of the incident light.

However, embodiments of the filter are not particularly limited. For example, the filter including a $3\lambda/4$ wavelength layer in one region of the RC and LC regions and a $\lambda/4$ wavelength layer in the other region of the RC and LC region may generate the left-circularly polarized light and the right-circularly polarized light. The term "$3\lambda/4$ wavelength layer" as used herein may refer to a phase retardation device configured to phase-retard incident light by 3/4 times of a wavelength of the incident light. Such a device may be manufactured, for example, by stacking a $\lambda/2$ wavelength layer and the $\lambda/4$ wavelength layer. The $\lambda/2$ wavelength layer may phase-retard incident light by 1/2 times of a wavelength of the incident light.

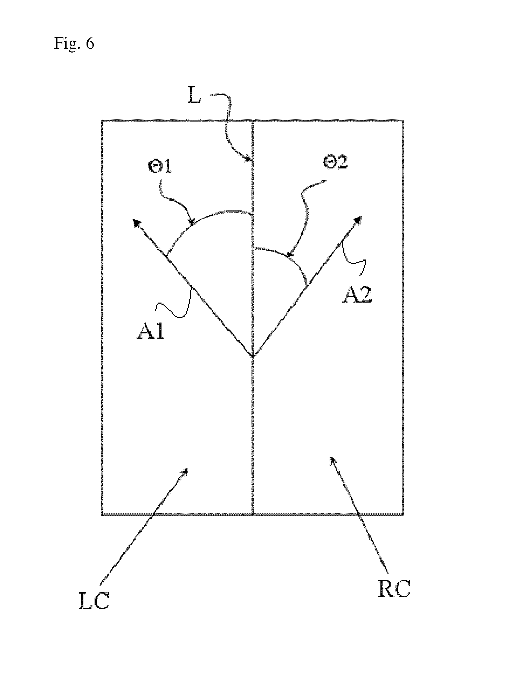

Fig. 6 shows a schematic of one illustrative embodiment that can be used for explaining the directions of the optical axes of the RC and LC regions as shown in Fig. 4 or 5. In the embodiment as shown in Fig. 6, the optical axis formed in the first direction is indicated by "A1" in the LC region, and the optical axis formed in the second direction is indicated by "A2" in the RC region.

The optical axes A1 and A2 of the RC and LC regions may be formed so that a line bisecting an angle formed by the optical axes A1 and A2 may be parallel or perpendicular to the absorption axis of the first polarizing plate. Due to the arrangement of the optical axes, the signal generated at the display element and having passed through the polarizing plate may be precisely converted into the left-circularly polarized light and the right-circularly polarized light. Thus, excellent stereoscopic image qualities may be realized, and side effects such as a so-called crosstalk may be prevented. Referring to Fig. 6, the term "line bisecting an angle formed by the optical axes" may refer to a line bisecting an angle of "$\Theta1+\Theta2$" or "$360-(\Theta1+\Theta2)$." For example, if $\Theta1$ and $\Theta2$ are the same angle, the line bisecting the angle may be formed to be horizontal with respect to the boundary line "L" between the RC and LC regions.

Also, the optical axes A1 and A2 of the RC and LC regions may be formed in vertical directions with respect to each other. For example, this state may refer to a state in which the angle of "$\Theta1+\Theta2$" or "$360-(\Theta1+\Theta2)$" is substantially 90 degrees as shown in Fig. 6. Due to the arrangement of the optical axes, excellent stereoscopic image qualities such as viewing angle and contrast ratio may be realized, and the crosstalk may also be prevented.

The filter according to one embodiment may further include a base layer. The retardation layer such as the $\lambda/4$ wavelength layer may be formed on the base layer. In this case, the $\lambda/4$ wavelength layer may be arranged so as to face the display element, and the base layer may be arranged so as to face the observer. For example, conventional glass base layers or plastic base layers known in the art may be used as the base layer.

As such, the plastic base layer that may be used herein may include a cellulose base layer such as a triacetyl cellulose (TAC) layer or a diacetyl cellulose (DAC) layer ; a base layer formed from cycloolefin polymer such as a norbornene derivative; an acrylic base layer formed from acrylic polymer such as poly(methyl methacrylate) (PMMA); a polycarbonate (PC) base layer; a polyolefin base layer such as a polyethylene (PE) layer or a polypropylene (PP) layer ; a poly(vinyl alcohol) (PVA) base layer; a poly(ether sulfone) (PES) base layer; a poly(etheretherketone) (PEEK) base layer; a poly(etherimide) (PEI) base layer; a poly(ethylene naphthalate) (PEN) base layer; a polyester base layer such as a poly(ethylene terephthalate) (PET) layer; a polyimide (PI) base layer; a polysulfone (PSF) base layer; or a fluoropolymer base layer such as an amorphous fluoropolymer base laeyr. In one embodiment, the cellulose base layer such as a TAC base layer may be used.

The base layer may have a single-layer structure or a multilayer structure, but the base layer having a single-layer structure is preferred in an aspect of providing an element having a smaller thickness.

A thickness of the base is not particularly limited, but may be properly regulated according to a desired purpose of use.

In one embodiment, the retardation layer such as the $\lambda/4$ wavelength layer, which may be formed on the base layer, may include an alignment layer formed on the base layer and a liquid crystal layer formed on the alignment layer. For example, the liquid crystal layer may be a $\lambda/4$ wavelength layer having an optical axis formed in different directions according to regions, and the alignment layer formed under the liquid crystal layer may be a layer functioning to control the optical axis of the wavelength layer. A conventional alignment layer known in the art may be used as the alignment layer. The alignment layer usable herein may include a photo-alignment layer whose alignment may be determined by a reaction such as cistrans isomerization, fries rearrangement or dimerization reaction induced by an irradiation with linearly polarized lights and which may induce alignments of the adjacent liquid crystal layer by the determined alignment; a polymer layer such as a rubbed polyimide layer; or a curable acrylic polymer layer formed in which a plurality of grooves are formed in a certain pattern.

The liquid crystal layer is widely known in the art, and may be a photocrosslinked layer or photo-polymerized layer of photo-crosslinkable or photopolymerizable liquid crystal compounds. A variety of liquid crystal compounds showing the above-described characteristics are known in the art. Examples of the liquid crystal compound may include reactive mesogen (RM, commercially available from Merck) or LC242 (commercially available from BASF).

Methods of manufacturing the filter is not particularly limited, but a variety of methods of manufacturing a filter are widely known in the art. Here, all the methods are applicable in consideration of the relationship between the absorption axis of the polarizing plate and the optical axis of the filter.

If the observer wears the glasses and then observes the R and L signals which have different polarized states from each other and which are emitted from the filter, it is possible to observe the stereoscopic image.

The glasses may include a region (hereinafter referred to as "GL region") for the left eye and a region (hereinafter referred to as "GR region") for the right eye. Here, each of the GL and GR regions may include a retardation layer and a polarizer.

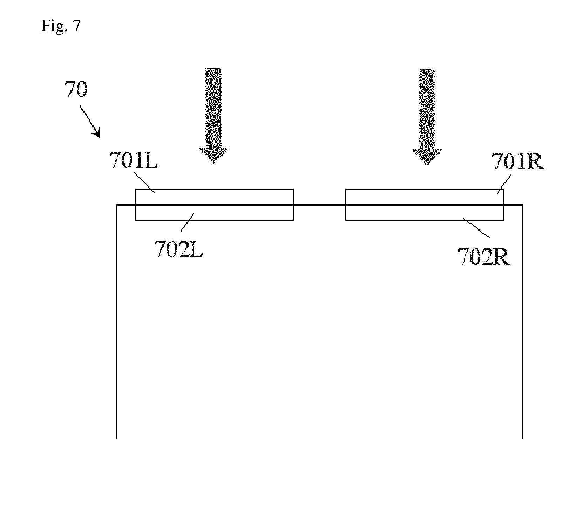

Fig. 7 shows a schematic of one illustrative embodiment of the glasses 70. The glasses 70 in Fig. 7 may include the GL region including the retardation layer 701L and the polarizer 702L and also the GR region including the retardation layer 701R and the polarizer 702R. An arrow in Fig. 7 may indicate a traveling direction of the R or L signal emitted from the stereoscopic image display device.

The polarizer included in the glasses may be an optical device having an absorption axis formed in a certain direction, and a transmission axis formed in a direction perpendicular to the absorption axis, as the polarizing plate included in the stereoscopic image display device.

In the glasses according to one embodiment, the polarizers may be arranged in the GR and GL regions, respectively, so that the absorption axis of the polarizer in the GR region may be formed to be parallel to the absorption axis of the polarizer in the GL region. Also, the absorption axes of the polarizers, which are formed in the parallel directions to each other, may be arranged so that the absorption axes of the polarizers may be formed to be vertical to the absorption axis of the first polarizing plate under the state where the glasses are disposed so that an imaginary line connecting the center of the GL region and the center of the GR region may be formed to be vertical or horizontal with respect to a boundary line between the RC region and the LC region of the stereoscopic image display device. In this state, it is possible to observe a high-quality stereoscopic image.

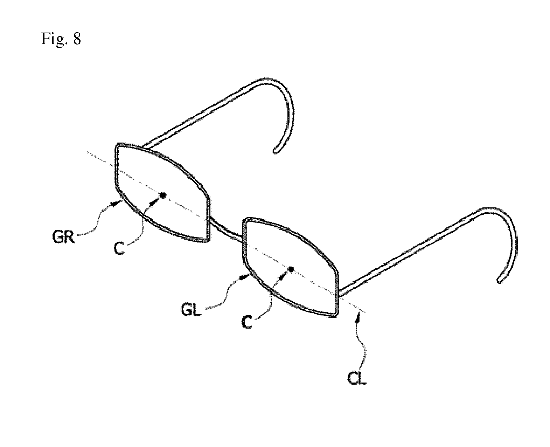

For example, the term "imaginary line connecting the centers of the GL and GR regions of the glasses" as used herein may refer to an imaginary line "CL" connecting the centers "C" of the GR and GL regions "GR" and "GL," as shown in Fig. 8. In the above, the center of the each of the regions may refer to the center of gravity.

The stereoscopic image display device, the stereoscopic image emitted from which can be observed after wearing the glasses may satisfy the requirement of the following Formula 1 or 2.

Formula 1

$$D_L = |\theta_2 - \theta_L| \leq 15.0$$

Formula 2

$$D_R = |\theta_1 - \theta_R| \leq 15.0$$

In Formulas 1 and 2, $D_L$ represents a degree by which an optical axis of a retardation layer of the LC region is deviated from an optical axis of a retardation layer of the GL region, $\theta_2$ represents an angle formed by an optical axis of the retardation layer of the LC region and an absorption axis of a first polarizing plate, $\theta_L$ represents an angle formed by the optical axis of the retardation layer of the GL region and the absorption axis of the first polarizing plate under a state where the polarizer of the GL region of the glasses is positioned so as for the absorption axis of the polarizer to be formed to be vertical to the absorption axis of the first polarizing plate, $D_R$ represents a degree by which an optical axis of a retardation layer of the RC region is deviated from an optical axis of a retardation layer of the GR region, $\theta_1$ represents an angle formed by the optical axis of the retardation layer of the RC region and the absorption axis of the first polarizing plate, and $\theta_R$ represents an angle formed by the optical axis of the retardation layer of the GR region and the absorption axis of the first polarizing plate under a state where the polarizer of the GR region of the glasses is positioned so as for the absorption axis of the polarizer to be formed to be vertical to the absorption axis of the first polarizing plate.

In Formulas 1 and 2, each of the angles of "$\theta_1$," "$\theta_2$," "$\theta_1$" and "$\theta_R$" may be an angle measured from the absorption axis of the first polarizing plate in a clockwise or anticlockwise direction. However, each angle applied to the same Formula may be an angle measured in the same direction.

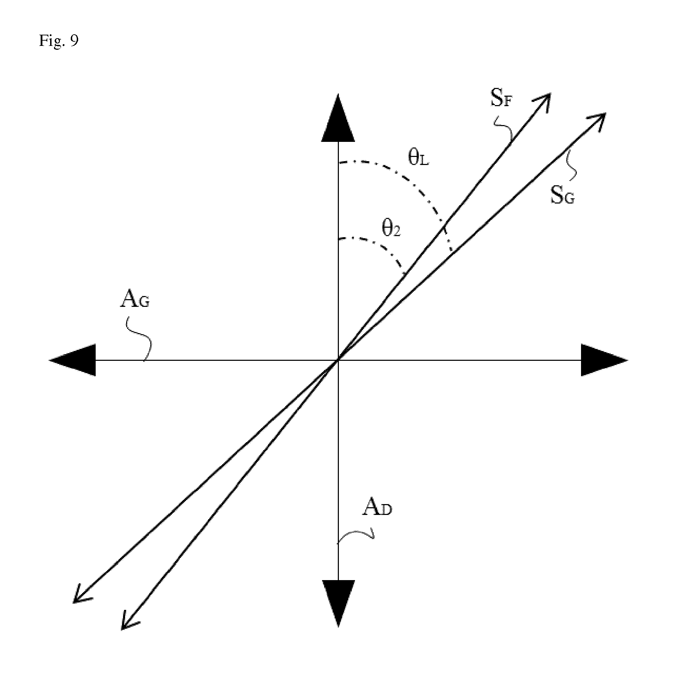

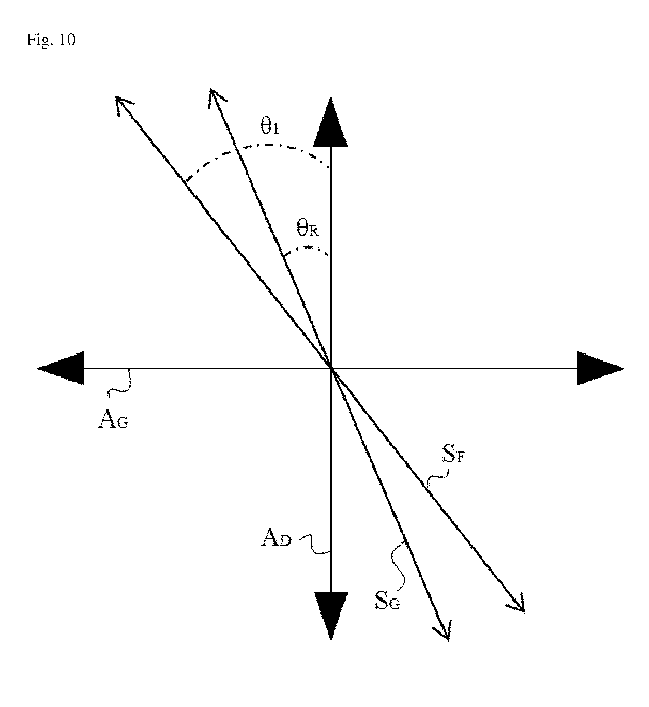

Fig. 9 shows a schematic of one illustrative embodiment of the relationship of the angles defining the "$D_L$" in Formula 1. In Fig. 9, the angle of the optical axis "$S_F$" of the retardation layer of the LC region measured from the absorption axis "$A_D$" of the first polarizing plate in a clockwise direction under the state where the absorption axis "$A_D$" of the first polarizing plate and the absorption axis "$A_G$" of the polarizer of the GL region are arranged so as to be vertical to each other is indicated as "$\theta_2$." Also, the angle of the optical axis "$S_G$" of the retardation layer of the GL region measured from the absorption axis "$A_D$" in the clockwise direction is indicated as "$\theta_L$." Also, Fig. 10 shows a schematic of one illustrative embodiment of the relationship of the angles defining the "$D_R$" in Formula 2. In Fig. 10, the angle of the optical axis "$S_F$" of the retardation layer of the RC region measured from the absorption axis "$A_D$" of the first polarizing plate in an anticlockwise direction under the state where the absorption axis "$A_D$" of the first polarizing plate and the absorption axis "$A_G$" of the polarizer of the GR region are arranged so as to be vertical to each other is indicated as "$\theta_1$." Also, the angle of the optical axis "$S_G$" of the retardation layer of the GR region measured from the absorption axis "$A_D$" in the anticlockwise direction is indicated as "$\theta_R$."

In Formula 1, the "$D_L$" may be, for example, 14 or less, 13 or less, 12 or less, 11 or less, 10 or less, 9 or less, 8 or less, 7 or less, 6 or less or 5 or less. In one embodiment, the "$D_L$" may not be zero. Also, in Formula 2, the "$D_R$" may be, for example, 14 or less, 13 or less, 12 or less, 11 or less, 10 or less, 9 or less, 8 or less, 7 or less, 6 or less or 5 or less. In one embodiment, the "$D_R$" may not be zero.

The stereoscopic image display device or the glasses may satisfy the Formula 1 or 2, or in another embodiment, the stereoscopic image display device or the glasses may satisfy both of the Formulas 1 and 2.

In another embodiment, the stereoscopic image display device or the glasses may satisfy the requirements of the following Formula 3 or 4.

Formula 3

$$D_L - 10 \leq -0.0199x^2 + 4.9777x - 306.56 \leq D_L + 10$$

<u>Formula 4</u>

$$D_R - 10 \leq -0.0199y^2 + 4.9777y - 306.56 \leq D_R + 10$$

In Formulas 3 and 4, $D_L$ and $D_R$ are the same as defined in the Formulas 1 and 2, x represents a phase difference value of the retardation layer of the LC or GL region, and y represents a phase difference value of the retardation layer of the RC or GR region.

The stereoscopic image display device or glasses satisfying the Formulas 3 and 4 may be obtained, for example, by configuring a display device or glasses so as to have the above described deviated angle and the phase difference value described below.

In Formulas 3 and 4, the phase difference value may be, for example, an in plane phase retardation value of the retardation layer calculated using the following Equation 3, or an in thickness phase retardation value of the retardation layer calculated using the following Equation 4. In another embodiment, the phase difference value may be the in plane phase retardation value calculated using the following Equation 1.

<u>Equation 3</u>

$$R_{in} = (X-Y) \times D$$

<u>Equation 4</u>

$$R_{th} = (Z-Y) \times D$$

In Equations 3 and 4, $R_{in}$ represents the in plane phase retardation value of the retardation layer, $R_{th}$ represents the in thickness phase retardation value of the retardation layer, X represents a refractive index of the retardation layer in an in plane slow axis direction, Y represents a refractive index of the retardation layer in an in plane fast axis direction, Z represents a refractive index of the retardation layer in a thickness direction, and D represents a thickness of the retardation layer.

As such, each refractive index may be, for example, a refractive index measured with respect to light having a wavelength of approximately 550 nm or approximately 589 nm.

In Formula 3, x represents a phase difference value of the retardation layer of the LC or GL region, for example, a phase difference value of the retardation layer of the LC region.

Also, in Formula 4, y represents a phase difference value of the retardation layer of the RC region or GR region, for example, a phase difference value of the retardation layer of the RC region.

In Formula 3, a lower limit of the expression "-0.0199x$^2$+4.9777x-306.56" may be, for example, $D_L$-9, $D_L$-8, $D_L$-7, $D_L$-6, $D_L$-5, $D_L$-4, $D_L$-3, $D_L$-2 or $D_L$-1. Also, an upper limit of the expression "-0.0199x$^2$+4.9777x-306.56" may be, for example, $D_L$+9, $D_L$+8, $D_L$+7, $D_L$+6, $D_L$+5, $D_L$+4, $D_L$+3, $D_L$+2 or $D_L$+1.

Also, in Formula 4, a lower limit of the expression "-0.0199y$^2$+4.9777y-306.56" may be, for example, $D_R$-9, $D_R$-8, $D_R$-7, $D_R$-6, $D_R$-5, $D_R$-4, $D_R$-3, $D_R$-2 or $D_R$-1. Also, an upper limit of the expression "-0.0199y2$^+$4.9777y-306.56" may be, for example, $D_R$+9, $D_R$+8, $D_R$+7, $D_R$+6, $D_R$+5, $D_R$+4, $D_R$+3, $D_R$+2 or $D_R$+1.

In one embodiment, as in the Formulas 1 and 2, the "$D_L$" in Formula 3 may not be zero, and the "$D_R$" in Formula 4 may not be zero.

The stereoscopic image display device or the glasses may satisfy the Formula 3 or 4. In another embodiment, the stereoscopic image display device or the glasses may satisfy both of the Formulas 3 and 4.

In the stereoscopic image display device satisfying the Formula 1 and/or the Formula 2, and/or the Formula 3 and/or the Formula 4 as described above, the retardation layers in the RC and LC regions may, for example, have a phase difference value of 100 nm to 200 nm. Here, the phase difference value may be the in plane phase retardation value measured using the Equation 3 or the in thickness phase retardation value calculated using the Equation 4. For example, the phase difference value may be the plane phase retardation value.

In one embodiment, a variation between the phase difference value of the retardation layer in the GL region and the phase difference value of the retardation layer in the LC region may also be not more than ±15 nm, not more than ±12 nm, not more than ±9 nm, not more than ±7 nm, not more than ±6 nm, not more than ±5 nm, not more than ±4 nm, or not more than ±3 nm. Also, a variation between the phase difference value of the retardation layer in the GR region and the phase difference value of the retardation layer of the RC region may be not more than ±15 nm, not more than ±12 nm, not more than ±9 nm, not more than ±7 nm, not more than ±6 nm, not more than ±5 nm, not more than ±4 nm, or not more than ±3 nm.

As described above, the characteristics of the retardation layer included in the glasses and the filter may be regulated so that the difference in optical properties between the R signal and the L signal can be minimized and a high-quality stereoscopic image can be observed without causing adverse effects such as crosstalk when the stereoscopic image is observed on the display device.

Also, the present invention relate to glasses, for example, glasses for observing a stereoscopic image.

The glasses according to one embodiment may be used to observe the stereoscopic image output from the stereoscopic image display device. The stereoscopic image display may include a display element including LS and RS regions, which are configured to generate the L and R signals, respectively, in the driving state; a first polarizing plate arranged so that the L and R signals generated at the display element may be incident on; and a filter including LC and RC regions which are arranged so that the L and R signals generated at the LS and RS regions may be incident on after passing through the first polarizing plate, respectively, and each of which includes a retardation layer.

The glasses may have GL and GR regions, and each of the GL and GR regions may include a retardation layer and a polarizer.

In the glasses, the GL region may be a region on which the L signal output from the stereoscopic image display device is incident, and the GR region may be a region on which the R signal output from the stereoscopic image display device is incident.

The glasses may satisfy the Formula 1 and/or the Formula 2, and/or satisfy the Formula 3 and/or the Formula 4, as described above.

The details of the glasses and the details of the stereoscopic image display device outputting the stereoscopic image may be applicable in the same manner as in the details of the above-described stereoscopic image display device.

TECHNICAL EFFECT

The stereoscopic image display device or glasses may be useful in minimizing the difference in optical properties between the R signal and the L signal and observing a high-quality stereoscopic image without causing adverse effects such as so-called crosstalk when the stereoscopic image is observed on the display device.

BRIEF DESCRIPTION OF THE DRAWINGS

Fig. 1 shows a schematic of one illustrative embodiment of a stereoscopic image display device.

Figs. 2 and 3 show schematics of illustrative embodiments of the arrangement of LS regions and RS regions.

Figs. 4 and 5 show schematics of illustrative embodiments of the arrangement of LC regions and RC regions.

Fig. 6 shows a schematic of one illustrative embodiment used for explaining the relationship between the optical axes of retardation layers in the LC and RC regions.

Figs. 7 and 8 show schematics of illustrative embodiments of glasses for observing a stereoscopic image.

Figs. 9 and 10 show schematics of illustrative embodiments used for explaining $D_R$ and $D_L$.

Fig. 11 shows the relationship between the deviated angle from the optical axis and the phase difference value so as to secure characteristics such as a crosstalk ratio of 1% or less when a stereoscopic image determined in Examples is observed.

ILLUSTRATIVE EMBODIMENTS

Hereinafter, the stereoscopic image display device and the glasses will be described in further detail with reference to Examples and Comparative Examples. However, the following Examples are not intended to limit the scope of the stereoscopic image display device.

Physical properties of the stereoscopic image display device and the glasses prepared in Examples were evaluated according to the following methods

**1. Phase difference value of retardation layer**

A phase difference value of a retardation layer may be measured using light having a wavelength of 550 nm or 589 nm. Sixteen Muller matrixes of the retardation layer may be measured according to the manufacturer's manual using equipment (Axoscan, commercially available from Axomatrics) capable of measuring the sixteen Muller matrixes, and the phase difference may be calculated from these measured values.

**2. Evaluation method of crosstalk ratio**

A crosstalk ratio of a stereoscopic image display device may be defined as a ratio of brightness in a dark state and a bright state. Crosstalk ratios of the stereoscopic image display devices used in Examples may be, for example, measured using the following method. First, glasses for observing the stereoscopic image are positioned at a conventional observation point of the stereoscopic image display device. In this case, the conventional observation point is a point spaced apart from the center of the stereoscopic image display device by a distance corresponding to 3/2 times a length of the stereoscopic image display device in a horizontal direction. The glasses are positioned at such an observation point on the assumption that an observer observes the center of the display device. If it is assumed that the observer observes the stereoscopic image, the length in the horizontal direction of the stereoscopic image display device may be a length in a horizontal direction based on of the observer, for example, a horizontal length of the stereoscopic image display device. In the above arrangement, illuminance meters (equipment name: SR-UL2 Spectrometer) are disposed at the rear surfaces of the GL and GR regions of the glasses under a state where the stereoscopic image display device outputs the L signal, and measured for brightness for each case. In this case, the brightness measured in the rear surface of the GL region is brightness in a bright state, and the brightness measured at the rear surface of the GR region is brightness in a dark state. After measurement of each brightness, a ratio of the brightness in the dark state to the brightness in the bright state ([brightness in the dark state]/[brightness in the bright state]) may be calculated, and the percentage of the ratio may be defined as the crosstalk ratio. Also, the crosstalk ratio may also be measured in the same manner as described above, except that the brightness in the bright state and the dark state is measured under a state where the display device outputs the R signal. In this case, the brightness measured at the rear surface of the GL region is brightness in the dark state, and the brightness measured at the rear surface of the GR region is brightness in the bright state. Also, a ratio of the brightness in the dark state to the brightness in the bright state ([brightness in the dark state]/[brightness in the bright state]) may be calculated, and the percentage of the ratio may be defined as the crosstalk ratio.

**Example 1**

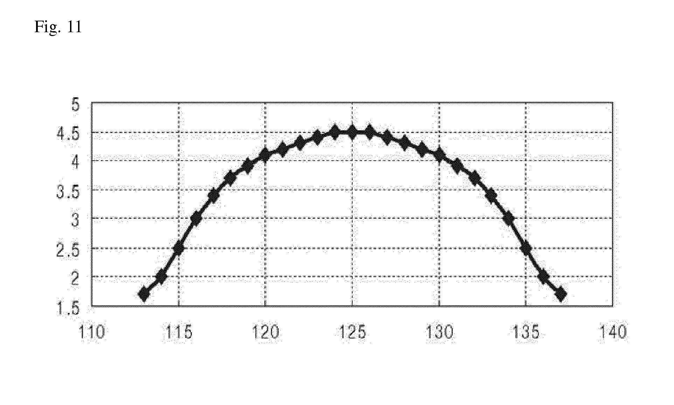

A display device 10 which had the structure as shown in Fig. 1, and in which the RS and LS regions of the display element 103 were positioned as shown in Fig. 2, and the RC and LC regions of the filter 105 were positioned as shown in Fig. 4 was configured. In the display device 10, a retardation layer having a slow axis forming an angle of 45 degrees with the absorption axis of the first polarizing plate 104 in an anticlockwise direction was positioned in the RC region of the filter, and a retardation layer having a slow axis forming an angle of 45 degrees with the absorption axis of the first polarizing plate 104 in a clockwise direction was positioned in the LC region of the filter. In the display device 10, the absorption axis of the first polarizing plate 104 was horizontal with respect to the vertical direction of the display device 10, and the absorption axis of the second polarizing plate 102 was vertical with respect to the absorption axis of the first polarizing plate 104. A crosstalk ratio in case where an image emitted from the display device 10 was observed using glasses which included the GL and GR regions as shown in Fig. 7 was measured. In the above, as the retardation layers 701L and 701R, retardation layers, each of which had the in plane phase retardation value ($R_{in}$) of 125 nm, were included in the GL and GR regions. The absorption axes of the polarizers 702L and 702R were formed in the same direction in the glasses 70. If the imaginary line "CL" as shown in Fig. 8 was positioned to be vertical to the boundary between the LC and RC regions of the display device 10, the absorption axes of the polarizers 702L and 702R were vertical to the absorption axis of the first polarizing plate 104. In such a state, the optical axes of the retardation layers 701L and 701R of the GR or GL region of the glasses or the phase difference value $R_{in}$ of the RC or LC region were variously changed, and the crosstalk ratios were evaluated. As a result, the crosstalk ratio measured by varying the optical axis of the retardation layer 701R of the GR region and the phase difference value $R_{in}$ of the RC region and the crosstalk ratio measured by varying the optical axis of the retardation layer 701L of the GL region and the phase difference value $R_{in}$ of the LC region showed the same pattern. Sets of values of the $D_L$ values and the phase difference values of the retardation layers of the LC region, in which the crosstalk ratio was measured to be 1%, are listed in the following Table 1, and shown as a graph in Fig. 11.

In Fig. 11, the "x" axis represents the phase difference value (unit: nm) and the "y" axis represents the relative deviated degree (unit: degrees) of the optical axis.

Table 1

| Phase difference values ($R_{in}$) of the retardation layers of the LC regions (unit: nm) | $D_L$ |
| --- | --- |
| 113 | 1.7 |
| 114 | 2 |
| 115 | 2.5 |
| 116 | 3 |
| 117 | 3.4 |

(continued)

| Phase difference values ($R_{in}$) of the retardation layers of the LC regions (unit: nm) | $D_L$ |
|---|---|
| 118 | 3.7 |
| 119 | 3.9 |
| 120 | 4.1 |
| 121 | 4.2 |
| 122 | 4.3 |
| 123 | 4.4 |
| 124 | 4.5 |
| 125 | 4.5 |
| 126 | 4.5 |
| 127 | 4.4 |
| 128 | 4.3 |
| 129 | 4.2 |
| 130 | 4.1 |
| 131 | 3.9 |
| 132 | 3.7 |
| 133 | 3.4 |
| 134 | 3 |
| 135 | 2.5 |
| 136 | 2 |
| 137 | 1.7 |

**Example 2**

The device 10 and glasses 70 were configured in the same manner as in Example 1, except that the absorption axis of the first polarizing plate 104 was formed to be horizontal with respect to the horizontal direction of the display device 10, a retardation layer having a slow axis forming an angle of 45 degrees with the absorption axis of the first polarizing plate in a clockwise direction was positioned in the RC region, and a retardation layer having a slow axis forming an angle of 45 degrees with the absorption axis of the first polarizing plate in an anticlockwise direction was positioned in the LC region. Then, by using the device 10, the crosstalk ratio was measured in the same manner as described above. As a result, if the $D_L$ or $D_R$ was below approximately 5 degrees or less, the crosstalk ratio was measured to be 1% or less, similar to Example 1.

**Example 3**

The device 10 and glasses 70 were configured in the same manner as in Example 1, except that the absorption axis of the first polarizing plate 104 was formed to form an angle of 45 degrees with a vertical direction of the device 10 in an anticlockwise direction, a retardation layer having a slow axis forming an angle of 45 degrees with the absorption axis of the first polarizing plate 104 in an anticlockwise direction was positioned in the RC region, and a retardation layer having a slow axis forming an angle of 45 degrees with the absorption axis of the first polarizing plate 104 in a clockwise direction was positioned in the LC region. Then, by using the device 10, the crosstalk ratio was measured in the same manner as described above. As a result, if the $D_L$ or $D_R$ was below approximately 5 degrees or less, the crosstalk ratio was measured to be 1% or less, similar to Example 1.

**Example 4**

The device 10 and glasses 70 were configured in the same manner as in Example 1, except that the absorption axis of the first polarizing plate 104 was formed to form an angle of 45 degrees with a vertical direction of the device 10 in a clockwise direction, a retardation layer having a slow axis forming an angle of 45 degrees with the absorption axis of the first polarizing plate 104 in an anticlockwise direction was positioned in the RC region, and a retardation layer having a slow axis forming an angle of 45 degrees with the absorption axis of the first polarizing plate 104 in a clockwise direction was positioned in the LC region. Then, by using the device 10, the crosstalk ratio was measured in the same manner as described above. As a result, if the $D_L$ or $D_R$ was below approximately 5 degrees or less, the crosstalk ratio was measured to be 1% or less, similar to Example 1.

(**Explanation of the marks in the Figures**)

10: a stereoscopic image display device

101: a light source

102: a second polarizing plate

103: a display element

104: a first polarizing plate

105: a filter

106: an observer

70: glasses

701L, 701R: retardation layers

702L, 702R: polarizers

**Claims**

1. A stereoscopic image display device, a stereoscopic image emitted from which can be observed after wearing glasses comprising a region for a left eye and a region for a right eye, each of which comprises a retardation layer and a polarizer,

   the stereoscopic image display device comprising:

   a display element comprising a region configured to generate a signal for the left eye in a driving state and a region configured to generate a signal for the right eye in the driving state;
   a first polarizing plate arranged so as for the signals for the left eye and the right eye generated at the display element to be incident on; and
   a filter comprising a polarization-state-control region for the signal for the left eye, which is positioned so as for the signal for the left eye generated at the region configured to generate the signal for the left eye to be incident on after passing through the first polarizing plate and which comprises a retardation layer, and a polarization-state-control region for the signal for the right eye, which is positioned so as for the signal for the right eye generated at the region configured to generate the signal for the right eye to be incident on after passing through the first polarizing plate and which comprises a retardation layer,

   and the stereoscopic image display device satisfying the following Formula 1 or 2:

   $$\underline{\text{Formula 1}}$$

   $$D_L = |\theta_2 - \theta_L| \leq 15.0$$

   $$\underline{\text{Formula 2}}$$

   $$D_R = |\theta_1 - \theta_R| \leq 15.0$$

   wherein $D_L$ is a relative deviation degree between an optical axis of the retardation layer of the polarization-state-control region for the signal for the left-eye and an optical axis of the retardation layer of the region for the left eye, $D_R$ is a relative deviation degree between an optical axis of the retardation layer of the polarization-state-control region for the signal for the right eye and an optical axis of the retardation layer of the region for the right eye, $\theta_2$ is an angle formed by the optical axis of the retardation layer of the polarization-state-control region for the signal for the left eye and an absorption axis of the first polarizing plate, $\theta_L$ is an angle formed by the optical axis of the retardation layer of the region for the left eye and the absorption axis of the first polarizing plate under a state where the absorption axis of the polarizer of the region for the left eye of the glasses is positioned so as to be vertical to the absorption axis of the first polarizing plate, $\theta_1$ is an angle formed by the optical axis of the retardation layer of the polarization-state-control region for the signal for the right eye and the absorption axis of the first polarizing plate, and $\theta_R$ is an angle formed by the optical axis of the retardation layer of the region for the right eye and the absorption axis of the first polarizing plate under a state where the absorption axis of the polarizer of the region for the right eye of the glasses is positioned so as to be vertical to the absorption axis of the first polarizing plate.

**2.** The stereoscopic image display device of claim 1, wherein the retardation layer of the polarization-state-control region for the signal for the left eye and the retardation layer of the polarization-state-control region for the signal for the right eye have optical axes formed in different directions from each other, and a line bisecting the angle formed by the optical axes formed in the different directions is vertical or horizontal to the absorption axis of the first polarizing plate.

**3.** The stereoscopic image display device of claim 1, wherein the polarizers of the region for the left eye and the region for the right eye have absorption axes formed in the same direction.

**4.** The stereoscopic image display device of claim 3, wherein the absorption axes of the polarizers in the region for the left eye and the region for right eye are vertical to the absorption axis of the first polarizing plate under a state where an imaginary line connecting centers of the regions for the left eye and for the right eye is positioned so as to be vertical to a boundary between the polarization-state-control regions for the signals for the left eye and for the right eye.

**5.** The stereoscopic image display device of claim 1, wherein the "$D_L$" and "$D_R$" are not zero.

**6.** The stereoscopic image display device of claim 1, satisfying both of the Formulas 1 and 2.

**7.** The stereoscopic image display device of claim 1, wherein each of the retardation layers of the polarization-state-control regions for the signals for the left eye and for the right eye has a phase difference of 100 nm to 200 nm.

**8.** The stereoscopic image display device of claim 7, wherein the difference in phase difference between the retardation layer of the polarization-state-control region for the signal for the left eye and the retardation layer of the region for the left eye is in a range of -15 nm to 15 nm.

**9.** The stereoscopic image display device of claim 3, wherein the difference in phase difference between the retardation layer of the polarization-state-control region for the signal for the right eye and the retardation layer of the region for the right eye is in a range of -15 nm to 15 nm.

**10.** A stereoscopic image display device, a stereoscopic image emitted from which can be observed after wearing glasses comprising a region for a left eye and a region for a right eye, each of which comprises a retardation layer and a polarizer,
the stereoscopic image display device comprising:

a display element comprising a region configured to generate a signal for the left eye in a driving state and a region configured to generate a signal for the right eye in the driving state;
a first polarizing plate arranged so as for the signals for the left eye and the right eye generated at the display element to be incident on; and
a filter comprising a polarization-state-control region for the signal for the left eye, which is positioned so as for the signal for the left eye generated at the region configured to generate the signal for the left eye to be incident on after passing through the first polarizing plate and which comprises a retardation layer, and a polarization-state-control region for the signal for the right eye, which is positioned so as for the signal for the right eye generated at the region configured to generate the signal for the right eye to be incident on after passing through the first polarizing plate and which comprises a retardation layer,
and the stereoscopic image display device satisfying the following Formula 3 or 4:

Formula 3

$$D_L-10 \leq -0.0199x^2+4.9777x-306.56 \leq D_L+10$$

Formula 4

$$D_R-10 \leq -0.0199y^2+4.9777y-306.56 \leq D_R+10$$

wherein $D_L$ and $D_R$ are the same as defined in claim 1, x represents a phase difference value of the retardation layer of the polarization-state-control region for the signal for the left eye or the region for the left eye, and y represents a phase difference value of the retardation layer of the polarization-state-control region for the signal for the right eye or the region for the right eye.

11. Glasses for observing a stereoscopic image emitted from a stereoscopic image display device, the stereoscopic image display device comprising a display element comprising a region configured to generate a signal for the left eye in a driving state and a region configured to generate a signal for the right eye in the driving state; a first polarizing plate arranged so as for the signals for the left eye and the right eye generated at the display element to be incident on; and a filter comprising a polarization-state-control region for the signal for the left eye, which is positioned so as for the signal for the left eye generated at the region configured to generate the signal for the left eye to be incident on after passing through the first polarizing plate and which comprises a retardation layer, and a polarization-state-control region for the signal for the right eye, which is positioned so as for the signal for the right eye generated at the region configured to generate the signal for the right eye to be incident on after passing through the first polarizing plate and which comprises a retardation layer,
the glasses comprising a region for the left eye and a region for the right eye, each region of which comprises a retardation layer and a polarizer, and the glasses satisfying the Formula 1 or 2:

$$\underline{\text{Formula 1}}$$

$$D_L = |\theta_2 - \theta_L| \leq 15.0$$

$$\underline{\text{Formula 2}}$$

$$D_R = |\theta_1 - \theta_R| \leq 15.0$$

wherein $D_L$ is a relative deviation degree between an optical axis of the retardation layer of the polarization-state-control region for the signal for the left-eye and an optical axis of the retardation layer of the region for the left eye, $D_R$ is a relative deviation degree between an optical axis of the retardation layer of the polarization-state-control region for the signal for the right eye and an optical axis of the retardation layer of the region for the right eye, $\theta_2$ is an angle formed by the optical axis of the retardation layer of the polarization-state-control region for the signal for the left eye and an absorption axis of the first polarizing plate, $\theta_L$ is an angle formed by the optical axis of the retardation layer of the region for the left eye and the absorption axis of the first polarizing plate under a state where the absorption axis of the polarizer of the region for the left eye of the glasses is positioned so as to be vertical to the absorption axis of the first polarizing plate, $\theta_1$ is an angle formed by the optical axis of the retardation layer of the polarization-state-control region for the signal for the right eye and the absorption axis of the first polarizing plate, and $\theta_R$ is an angle formed by the optical axis of the retardation layer of the region for the right eye and the absorption axis of the first polarizing plate under a state where the absorption axis of the polarizer of the region for the right eye of the glasses is positioned so as to be vertical to the absorption axis of the first polarizing plate.

12. The glasses of claim 11, wherein the polarizers of the region for the left eye and the region for the right eye have absorption axes formed in the same direction.

13. The glasses of claim 12, wherein the absorption axes of the polarizers in the region for the left eye and the region for right eye are vertical to the absorption axis of the first polarizing plate under a state where an imaginary line connecting centers of the regions for the left eye and for the right eye is positioned so as to be vertical to a boundary between the polarization-state-control regions for the signals for the left eye and for the right eye.

14. The glasses of claim 11, wherein the $D_L$ and $D_R$ are not zero.

15. Glasses for observing a stereoscopic image emitted from a stereoscopic image display device, the stereoscopic image display device comprising a display element comprising a region configured to generate a signal for the left eye in a driving state and a region configured to generate a signal for the right eye in the driving state; a first polarizing plate arranged so as for the signals for the left eye and the right eye generated at the display element to be incident on; and a filter comprising a polarization-state-control region for the signal for the left eye, which is positioned so as for the signal for the left eye generated at the region configured to generate the signal for the left eye to be incident on after passing through the first polarizing plate and which comprises a retardation layer, and a polarization-state-control region for the signal for the right eye, which is positioned so as for the signal for the right eye generated at the region configured to generate the signal for the right eye to be incident on after passing through the first polarizing plate and which comprises a retardation layer,

the glasses comprising a region for the left eye and a region for the right eye, each region of which comprises a retardation layer and a polarizer, and the glasses satisfying the Formula 3 or 4:

### Formula 3

$$D_L - 10 \leq -0.0199x^2 + 4.9777x - 306.56 \leq D_L + 10$$

### Formula 4

$$D_R - 10 \leq -0.0199y^2 + 4.9777y - 306.56 \leq D_R + 10$$

wherein $D_L$ and $D_R$ are the same as defined in claim 11, x represents a phase difference value of the retardation layer of the polarization-state-control region for the signal for the left eye or the region for the left eye, and y represents a phase difference value of the retardation layer of the polarization-state-control region for the signal for the right eye or the region for the right eye.

Fig. 1

10

101

102

103

104

105

| LS | RS | LS | RS | LS |
|----|----|----|----|----|
| LC | RC | LC | RC | LC |

106

Fig. 2

| LS | RS | LS | RS | LS | RS |
|----|----|----|----|----|----|

Fig. 3

| | | | | | |
|---|---|---|---|---|---|
| LS | RS | LS | RS | LS | RS |
| RS | LS | RS | LS | RS | LS |
| LS | RS | LS | RS | LS | RS |
| RS | LS | RS | LS | RS | LS |
| LS | RS | LS | RS | LS | RS |
| RS | LS | RS | LS | RS | LS |

Fig. 4

| LC | RC | LC | RC | LC | RC |
| --- | --- | --- | --- | --- | --- |

Fig. 5

| | | | | | |
|------|------|------|------|------|------|
| LC | RC | LC | RC | LC | RC |
| RC | LC | RC | LC | RC | LC |
| LC | RC | LC | RC | LC | RC |
| RC | LC | RC | LC | RC | LC |
| LC | RC | LC | RC | LC | RC |
| RC | LC | RC | LC | RC | LC |

Fig. 6

Fig. 7

70

701L

702L

701R

702R

Fig. 8

Fig. 9

Fig. 10

Fig. 11